Europäisches Patentamt

European Patent Office

Office européen des brevets

(11) Publication number: **0 257 152 B1**

# EUROPEAN PATENT SPECIFICATION

(45) Date of publication of patent specification: **21.10.92** (51) Int. Cl.⁵: **B01D 53/18**

(21) Application number: **86306550.4**

(22) Date of filing: **22.08.86**

Divisional application 91200073.4 filed on 22/08/86.

(54) **Support device for a packed column.**

(43) Date of publication of application:
**02.03.88 Bulletin 88/09**

(45) Publication of the grant of the patent:
**21.10.92 Bulletin 92/43**

(84) Designated Contracting States:
**DE FR GB IT NL**

(56) References cited:
**US-A- 3 222 040**
**US-A- 4 171 333**

(73) Proprietor: **NORTON COMPANY**
**1 New Bond Street**
**Worcester Massachusetts 01606(US)**

(72) Inventor: **Rukovena, Frank**
**790 Penn Wood Drive**
**Tallmadge Ohio 44278(US)**
Inventor: **Robinson, Kenneth**
**Woodlands Coton**
**Gnosall Stafford ST20 OE2(GB)**

(74) Representative: **Coxon, Philip et al**
**Eric Potter & Clarkson St. Mary's Court St.**
**Mary's Gate**
**Nottingham NG1 1LE(GB)**

## Description

This invention relates to a support device for a packed column. More particularly the invention relates to a support device for supporting a packing material in a packed column having counterflowing gas and liquid.

Packed columns are typically used for gas absorption and for distillation. The column contains a packing material through which the liquid usually flows downwardly and the gas usually flows upwardly. The packing material may, for example, comprise Raschig rings or Pall rings.

It is often desirable to take a sidestream from the packed column, and to do so presents particular problems. In particular it is necessary to provide a support device for the packing material beneath which is situated a collection tray.

The support device permits liquid to pass downwardly therethrough to be collected by the collection tray from where it can be directed to a side of the column. A proportion of the liquid is taken from the column as a sidestream, and the remainder, if any, is fed back to the column either above or below the collection tray.

The sidestream may be fed to another part of the chemical plant, or it may be recycled to the column at a position either above or below the collection tray.

It is clear from the foregoing that two separate items (ie. a collection tray and a support device) are needed when a sidestream is taken from a column. Furthermore, a spacing of 1 or 2 metres may be necessary between the support device and the collection tray. Thus, the provision of a sidestream in a column significantly increases capital costs. In addition, maintenance is time consuming because two separate items must be maintained.

Specification No US-A-3222040 discloses a support plate for a packed tower. The support plate comprises a perforated base portion and a plurality of formations extending from the base portion. Each formation comprises spaced apart perforated walls.

Specification No US-A-4171333 discloses a perforated support plate for supporting and injecting fluids into a bed of packing elements in treatment towers or vessels. The support plate comprises adjoining horizontal perforated wall portions which have extending therefrom spaced perforated sidewalls.

It is an object of the present invention to provide an improved support device for a packed column.

According to a first aspect of the present invention there is provided a support device for supporting a packing material in a packed column having a counterflowing gas and liquid, said device comprising a plate having a plurality of formations adapted to permit the flow of said gas therethrough, each formation comprising spaced sidewalls connected together at upper edge regions thereof, characterised in that the device further comprises collecting means provided on at least one of the formations, said collecting means being in the form of a channel adapted to collect liquid and direct the collected liquid to an edge of the plate for drainage.

This enables the support device to function as both a support device for the packing material and as a collector for downcoming liquid. The collecting means serves to reduce the amount of liquid which can flow through the support device.

Preferably the collecting means is provided on at least two of the formations, more preferably on each of the formations.

The collecting means is arranged to direct the collected liquid to an edge of the plate. To this end the collecting means comprises a channel which may be provided in the formations and the channel may extend from the formations to an edge of the plate. A liquid sump can be provided at the edge of the plate. The collected liquid may then be taken from the column as a sidestream.

The formations may be adapted to permit the flow of gas therethrough by the provision of apertures therein.

Advantageously the collecting means is arranged above the apertures so that, in use, the collecting means collects the liquid before it can run through the apertures. This arrangement enables the amount of liquid which flows through the support device to be reduced substantially.

In one embodiment each formation may comprise a single-skin construction.

In another embodiment each formation may comprise a plural-skin construction, advantageously a double-skin construction. To this end, a plurality of cover members may be provided, each cover member being disposed over a respective one of the formations. Each cover member may be adapted to permit the flow of gas therethrough by the provision of a plurality of apertures therein.

The cover members help to reduce further the amount of liquid which can flow through the support device.

The sidewalls of the formations may be connected by an upper wall. Desirably the cover members each comprise spaced side walls connected by an upper wall. The upper walls may extend substantially transverse to the side walls and substantially parallel to the plane of the plate.

Preferably the collecting means is provided on the upper wall of the formations. In the double-skin embodiment the collecting means can be provided on the upper wall of the cover members.

The channel may be formed in the upper wall of the formations. In the double-skin embodiment the channel may be formed in the upper wall of the cover members.

Alternatively the side walls of the formations may extend above the upper wall to define the collecting means between the side walls above the upper wall. In the double-skin embodiment the side walls of the cover members may extend above the upper wall.

The side walls of the formations may be arranged substantially parallel to one another. In use, the side walls can be disposed substantially vertically.

However, the side walls of the formations may be arranged such that the distance between the side walls increases or decreases with increasing distance from the upper wall; it is preferred that this distance decreases because it helps to reduce the amount of liquid which can flow through the support device.

Preferably the angle of divergence of the side walls is less than 15°, more preferably less than 10°.

If desired the formations can be streamlined in order to improve the efficiency of gas flow therethrough by reducing the pressure drop through the formations. This is especially useful when the double-skin construction is provided.

A first streamlining formation may be provided on the underside of the upper wall. A second streamlining formation may be provided on the underside of the plate between adjacent formations.

The first streamlining formations are preferably integral with the plate formations, and the second streamlining formations are preferably integral with the plate formations or the plate. This construction requires less material, has greater structural strength and is easier to manufacture.

The first and/or second streamlining formations may have a circular or triangular configuration, for example.

Preferably the formations extend across the plate and are substantially parallel to one another.

Reference is now made to the accompanying drawings, in which:-

Figure 1 is a diagrammatic plan view of a first embodiment of a support device in a packed column, according to the invention;

Figure 2 is a section on lines 2-2 of Figure 1;

Figure 3 is a section on lines 3-3 of Figure 1;

Figure 4 is a perspective view of the support device shown in Figures 1 to 3 with part broken away;

Figure 5 is a diagrammatic plan view of a second embodiment of a support device in a packed column, acocrding to the invention;

Figure 6 is a section on lines 6-6 of Figure 5;

Figure 7 is a section on lines 7-7 of Figure 5;

Figure 8 is a modification of the embodiment shown in Figure 7;

Figure 9 is a modification of the embodiment shown in Figure 7;

Figure 10 is a perspective view of a modification of the support device shown in Figures 1 to 4;

Figure 11 is a perspective view of a further embodiment of support device according to the invention;

Figure 12 is a perspective view of a chimney tray provided with streamlining according to the invention; and

Figure 13 is a perspective view of a packing support plate provided with streamlining according to the invention.

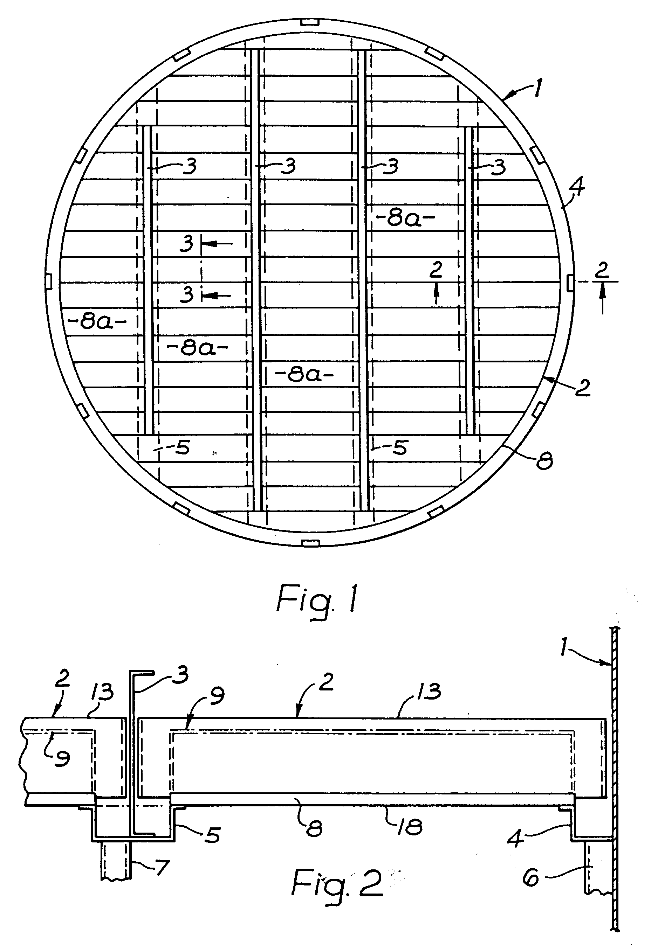

In Figures 1 to 4 a packed column generally designated 1 is provided with a support device 2; a packing material 90 is supported in the column 1 on top of the support device 2.

The support device 2 includes a plurality of beams 3 extending across the column 1, which serve to reinforce structurally the support device 2, and enable the support device 2 to be secured to the column 1.

The support device 2 also includes a circumferential sump 4 provided around the periphery thereof, and a plurality of parallel sumps 5 extending across the support device 2. The sumps 5 are substantially parallel to the beams 3, and each sump 5 is located in the region of a respective one of the beams 3.

Downpipes 6 (of which only one is shown) are secured to the sump 4, and downpipes 7 (of which only one is shown) are secured to the sumps 5. Liquid can be taken from the column 1 from the downpipes 6 and 7.

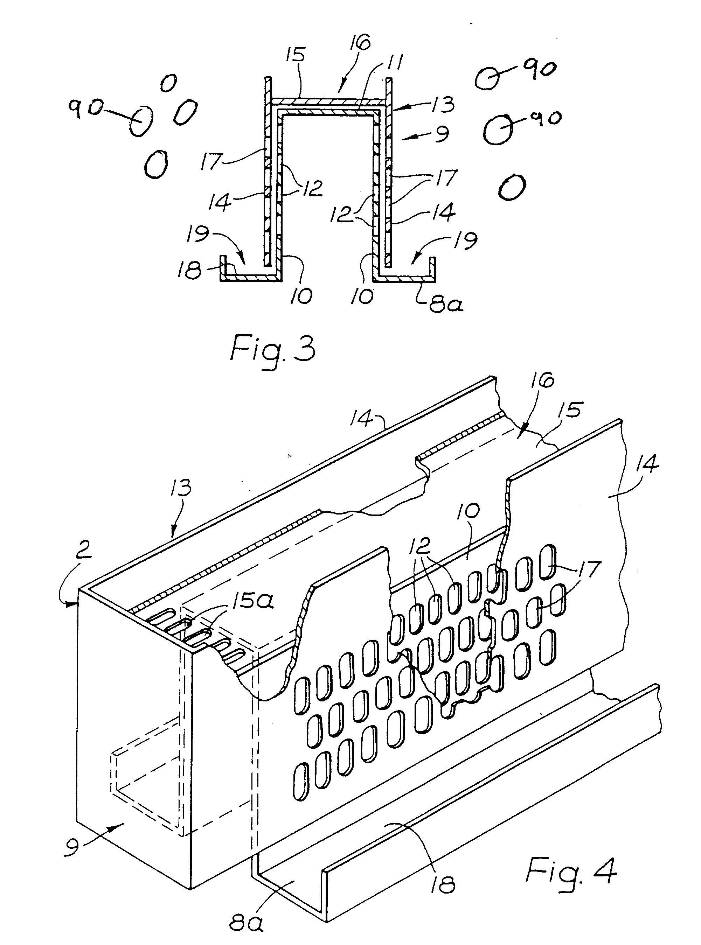

The support device 2 comprises a plate 8 having a plurality of formations 9 provided thereon; the plate 8 and formations 9 provide a corrugated configuration. The plate 8 is formed from a plurality of elongate members 8a one of which is shown in cross-section in Figure 3. The members 8a are juxtaposed and may be secured together by welding. It will be appreciated that the members 8a could be manufactured in one piece.

The formations 9 comprise spaced side walls 10 connected by an upper wall 11. A plurality of apertures 12 are provided in the side walls 10 to permit the flow of gas therethrough.

A double-skin construction is provided by the formations 9 which further include cover members 13; each cover member 13 comprises spaced side walls 14 which are connected by an upper wall 15. The side walls 14 extend above the upper wall 15 to define a channel 16 therebetween; the channel 16 acts as collecting means to collect liquid flowing downwardly through the column. The side walls 14 of each cover member 13 are provided with apertures 17 to permit the flow of gas therethrough. The apertures 17 are disposed out of alignment with the apertures 12 in order to reduce further the flow of liquid therethrough.

The channels 16 extend along the top of the formations 9 and deliver the liquid collected either to the circumferential sump 4 or to one of the sumps 5. The upper wall 15 of each cover member 13 is provided with apertures 15a at opposite ends thereof. The apertures 15a are disposed either above one of the sumps 5 or above the sump 4, so that liquid can drain into the sump from the channel 16.

Thus, the channels 16 reduce substantially the amount of liquid which flows through the apertures 12 and 17. If the channels 16 were not provided then liquid falling on the upper wall 15 would run down the side walls 14 and a portion of this liquid may flow through the apertures 12 and 17.

The plate 8 is provided with a base 18 and the formations 9 extend upwardly from the base 18. The base is non-perforated, so that neither liquid nor gas can flow therethrough. The base 18, together with adjacent formations 9, define a channel 19 therebetween. The channel 19 collects liquid not collected by the channel 16 and delivers this liquid either to the circumferential sump 4 or to one of the sumps 5.

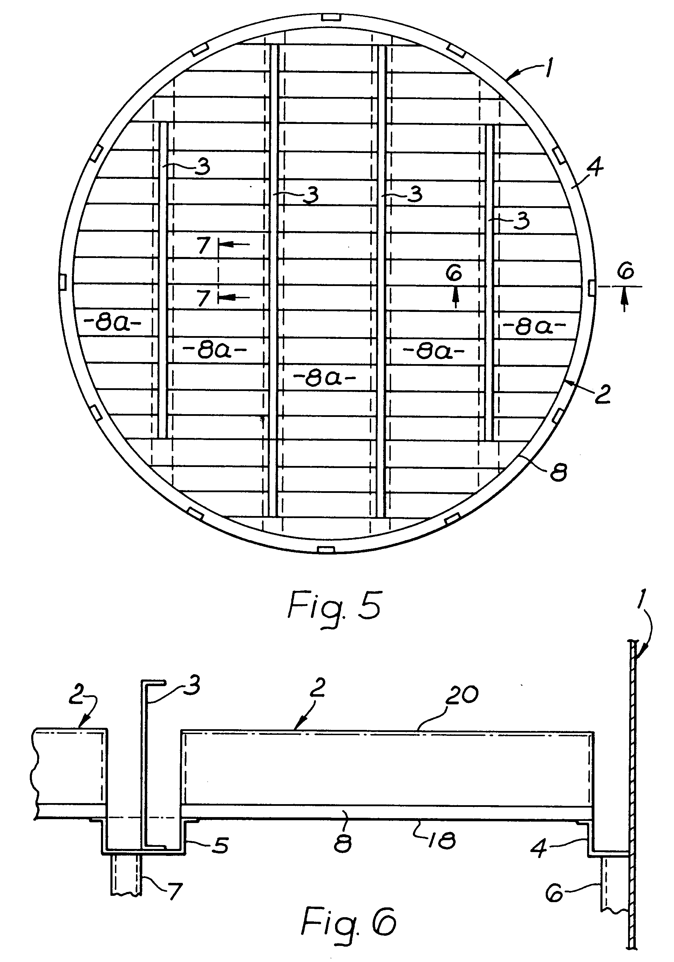

Another embodiment is shown in Figures 5 to 7; many of the parts in Figures 5 to 7 are similar to those shown in Figures 1 to 3 and like parts are designated with like reference numerals.

The principal difference is that the embodiment shown in Figures 5 to 7 is provided with a single-skin construction. Formations 20 are each provided with spaced side walls 21 and an upper wall 22 having a channel 23 therein. The channel 23 serves as collecting means and performs a similar function to the channel 16 in the embodiment shown in Figures 1 to 3.

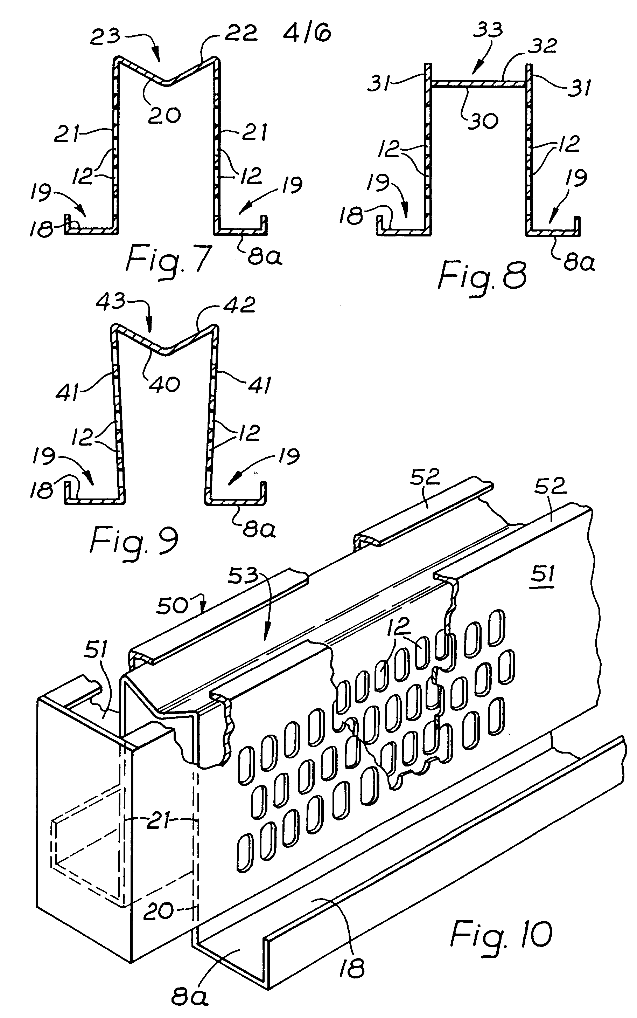

Figure 8 shows a modification of the formations 20 shown in Figure 6. The formations 20 are replaced with formations 30 which comprise spaced side walls 31 and an upper wall 32. The side walls 31 extend above the upper wall 32 and define a channel 33 therebetween. The channel 33 serves as collecting means and performs a similar function to the channels 16 and 23.

Figure 9 shows a further modification of the formations 20 shown in Figure 7. The formations 20 are replaced with formations 40 which comprise divergent spaced side walls 41 and an upper wall 42 having a channel 43 therein. The channel 43 serves as collecting means and performs a similar function to the channels 16, 23 and 33.

The distance between the side walls 41 decreases with increasing distance from the upper wall 42. This divergence helps to prevent liquid from flowing through the apertures 12.

In Figure 10 a further embodiment of support device 2 is shown. The formations 20 in this embodiment are the same as the formations 20 shown in Figure 6 and 7, except that they include cover members 50 which comprise spaced side walls 51 and an upper wall 52. A gap 53 is provided in the upper wall 52 through which liquid can flow to the channel 23.

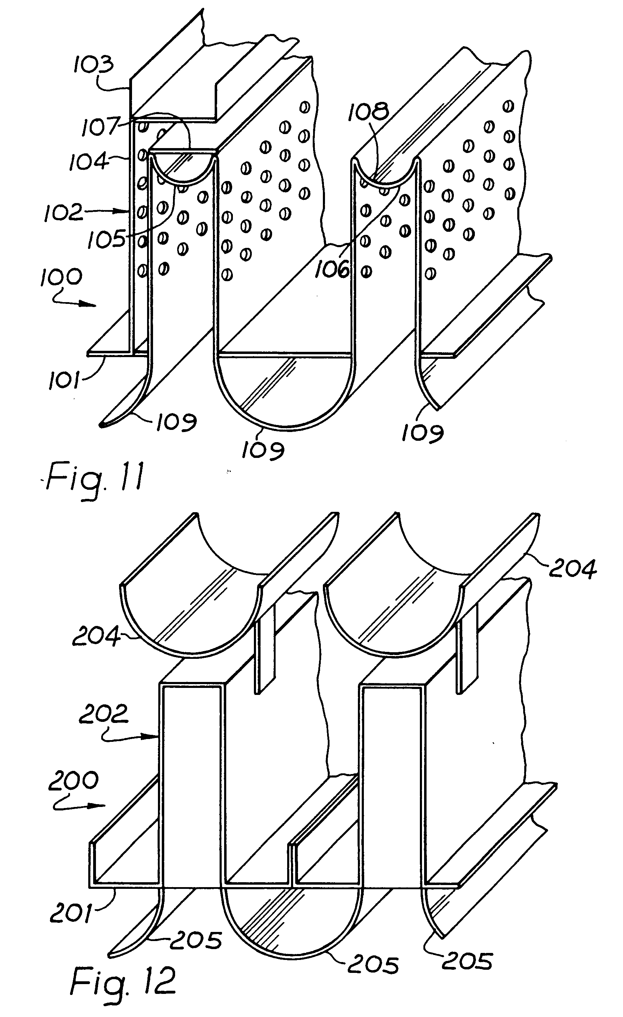

In Figure 11 a further embodiment of support device is designated 100. The support device 100 comprises a plate 101 with formations 102 and a collecting channel 103; the formations 102 comprise a double-skin construction and include cover members 104. For convenience only one cover member 104 is shown.

First streamlining formations 105 and 106 are provided beneath upper walls 107 and 108 respectively of the formations 102. The streamlining formations 105 and 106 are respectively integral and non-integral with the formations 102, and are circular in shape.

Second streamlining formations 109 are provided beneath the plate 101 between adjacent formations 102. The second streamlining formations 109 are integral with the formations 102.

Figure 12 shows a chimney tray 200 comprising a plate 201 and formations 202. The formations 202 are provided with streamlining formations 204 and 205 to improve the gas flow. Gas-flow apertures are omitted from Figure 12.

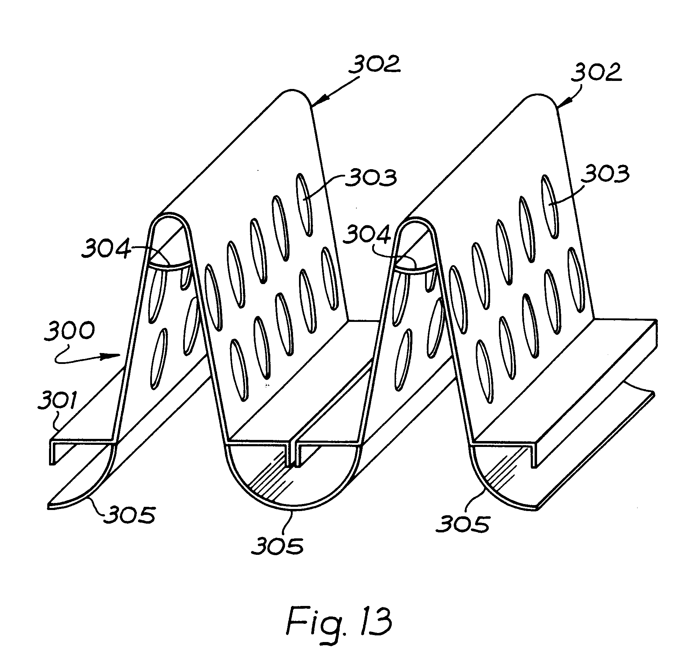

Figure 13 shows a packing support plate 300 comprising a plate 301 and formations 302. The formations 302 are provided with gas flow apertures 303. Streamlining formations 304 and 305 are provided to improve the gas flow.

**Claims**

1. A support device (2, 100, 200, 300) for supporting a packing material (90) in a packed column (1) having a counterflowing gas and liquid, said device (2) comprising a plate (8, 101, 201, 301) having a plurality of formations (9, 20, 30, 40, 102, 202, 302) adapted to permit the flow of said gas therethrough, each formation (9, 20, 30, 40, 102, 202, 302) comprising spaced sidewalls (10, 14, 21, 31, 41, 51) connected together at upper edge regions thereof, characterised in that the device (2) further comprises collecting means (16, 19, 23, 33, 43, 103) provided on at least one of the formations (9, 20, 30, 40, 102, 202, 302), said collecting means (9, 20, 30, 40, 102, 202, 302) being in the form of a channel (16, 19, 23, 33, 43, 103) adapted to collect liquid and to direct the collected liquid to an edge of the plate (8, 101, 201, 301) for drainage.

2. A support device (2, 100, 200, 300) according to Claim 1, in which said spaced side walls (10, 14, 21, 31, 41, 51) are arranged substantially parallel to one another.

3. A support device (2, 100, 200, 300) according to Claim 1 or 2, in which each formation has a single-skin construction.

4. A support device (2, 100, 200, 300) according to Claim 1 or 2, in which each formation has a plural-skin construction.

5. A support device (2, 100, 200, 300) according to Claim 1,2 or 4, in which each formation has a double-skin construction.

6. A support device (2, 100, 200, 300) according to any preceding claim, in which the formations are streamlined to improve the efficiency of gas flow therethrough.

7. A support device (2, 100, 200, 300) according to Claim 6, when dependent upon Claim 2 in which the side walls (10, 14, 21, 31, 41, 51) are connected by an upper wall (107) and a first streamlining formation (105) is provided on the underside of the upper wall.

8. A support device (2, 100, 200, 300) according to Claim 6 or 7, in which a second streamlining formation (109) is provided on the underside of the plate (101) between adjacent formations (102).

9. A support device (2, 100, 200, 300) according to Claim 7 or 8 in which the first streamlining formations are integral (105) with the plate formations (102) and/or the second streamlining formations (109) are integral with the plate (101) or with the plate formations (102).

10. A support device (2, 100, 200, 300) according to any preceding claim, wherein apertures (12, 17, 303) are provided in the side walls to permit the flow of the gas therethrough, and the channel (16, 23, 33, 43, 103) is provided on the upper wall of at least one formation.

11. A support device (2, 100, 200, 300) according to any preceding claim, in which the plate (8, 101, 201, 301) comprises a base (18) from which the formations (9, 20, 30, 40, 102, 202, 302) extend upwardly, and further channels for collecting liquid disposed above the base (18) between adjacent formations (9, 20, 30, 40, 102, 202, 302).

## Patentansprüche

1. Tragevorrichtung (2, 100, 200, 300) zum Tragen eines Packmaterials (90) in einer gepackten Kolonne (1), mit gegeneinander strömendem Gas und Flüssigkeit, wobei die Vorrichtung (2) eine Platte (8, 101, 201, 301) mit einer Vielzahl von Gebilden (9, 20, 30, 40, 102, 202, 302) aufweist, um den Gasdurchsatz durch sie zu ermöglichen, wobei jedes Gebilde (9, 20, 30, 40, 102, 202, 302) im Abstand voneinander angeordnete Seitenwände (10, 14, 21, 31, 41, 51) aufweist, die miteinander an ihren oberen Randbereichen verbunden sind, dadurch gekennzeichnet, daß die Vorrichtung (2) ferner eine Sammelanordnung (16, 19, 23, 33, 43, 103) aufweist an wenigstens einem der Gebilde (9, 20, 30, 40, 102, 202, 302), wobei die Sammelanordnung die Form eines Kanals (16, 19, 23, 33, 43, 103) aufweist zur Sammlung von Flüssigkeit und zur Leitung der gesammelten Flüssigkeit zu einem Rand der Platte zwecks Drainage.

2. Tragevorrichtung (2, 100, 200, 300) nach Anspruch 1, bei der die im Abstand voneinander angeordneten Seitenwände im wesentlichen parallel zueinander angeordnet sind.

3. Tragevorrichtung (2, 100, 200, 300) nach Anspruch 1 oder 2, bei der jedes Gebilde eine Einschicht-Konstruktion aufweist.

4. Tragevorrichtung (2, 100, 200, 300) nach Anspruch 1 oder 2, bei der jedes Gebilde eine Mehrschicht-Konstruktion aufweist.

5. Tragevorrichtung (2, 100, 200, 300) nach Anspruch 1, 2 oder 4, bei der jedes Gebilde eine Zweischicht-Konstruktion aufweist.

6. Tragevorrichtung (2, 100, 200, 300) nach einem der vorhergehenden Ansprüche, bei der die Gebilde stromlinienförmig sind, um den Gasdurchsatz durch sie hindurch zu verbessern.

7. Tragevorrichtung (2, 100, 200, 300) nach Anspruch 6, sofern dieser von Anspruch 2 abhängt, bei der die Seitenwände (10, 14, 21, 31, 41, 51) durch eine obere Wand (107) miteinander verbunden sind und ein erstes stromlinienförmiges Gebilde (105) an der Unterseite der Oberwand vorgesehen ist.

8. Tragevorrichtung (2, 100, 200, 300) nach Anspruch 6 oder 7, bei der ein zweites stromlinienförmiges Gebilde (109) an der Unterseite der Platte (101) zwischen benachbarten Gebilden (102) vorgesehen ist.

9. Tragevorrichtung (2, 100, 200, 300) nach Anspruch 7 oder 8, bei der die ersten stromlinienförmigen Gebilde ein integraler Bestandteil (105) der plattenförmigen Gebilde (102) und/oder die zweiten stromlinienförmigen Gebilde (109) integrale Bestandteile der Platte (101) oder der plattenförmigen Gebilde (102) sind.

10. Tragevorrichtung (2, 100, 200, 300) nach einem der vorhergehenden Ansprüche, bei der Öffnungen (12, 17, 303) in den Seitenwänden vorgesehen sind, um den Gasdurchsatz durch sie hindurch zu ermöglichen, während ein Kanal (16, 23, 33, 43, 103) an der oberen Wand von wenigstens einem Gebilde vorgesehen ist.

11. Tragevorrichtung (2, 100, 200, 300) nach einem der vorhergehenden Ansprüche, bei der die Platte (8, 101, 201, 301) ein Grundteil (18) aufweist, von dem aus sich die Gebilde (9, 20, 30, 40, 102, 202, 302) nach oben erstrecken sowie Kanäle aufweist zum Sammeln von Flüssigkeit, die oberhalb des Grundteils (18) zwischen benachbarten Gebilden (9, 20, 30, 40, 102, 202, 302) vorgesehen sind.

## Revendications

1. Dispositif support (2,100,200,300) pour supporter un matériau de garnissage (90) dans une colonne à garnissage (1) dans laquelle un gaz et un liquide circulent à contre-courant, ce dispositif comprenant une plaque (8,101,201,301) ayant plusieurs structures (9,20,30,40,102,202,302) adaptées pour permettre au gaz de circuler à travers elles, chaque structure (9,20,30,40,102,202,302) comprenant des parois latérales (10,14,21,31,41,51) raccordées ensemble au niveau de leurs bords supérieurs, caractérisé en ce que le dispositif comporte en outre des moyens de collecte (16,19,23,33,43,103) prévus sur au moins l'une des structures (9,20,30,40,102,202,302), les moyens de collecte se présentant sous la forme d'un conduit (16,19,23,33,43,103) adapté pour recueillir du liquide et pour diriger le liquide recueilli sur un bord de la plaque (8,101,201,301) à des fins d'évacuation.

2. Dispositif support (2,100,200,300) selon la revendication 1, dans lequel les parois latérales espacées (10,14,21,31,41,51) sont disposées pratiquement parallèles l'une à l'autre.

3. Dispositif support (2,100,200,300) selon la revendication 1 ou la revendication 2, dans lequel chaque structure comporte une seule enveloppe.

4. Dispositif support (2,100,200,300) selon la revendication 1 ou la revendication 2, dans lequel chaque structure a plusieurs enveloppes.

5. Dispositif support (2,100,200,300) selon l'une des revendications 1, 2 ou 4, dans lequel chaque structure est une structure à double enveloppe.

6. Dispositif support (2,100,200,300) selon l'une des revendications précédentes, dans lequel les structures sont profilées pour améliorer l'efficacité du courant gazeux qui les traverse.

7. Dispositif support (2,100,200,300) selon la revendication 6, lorsqu'elle dépend de la revendication 2, dans lequel les parois latérales (10,14,21,31,41,51) sont raccordées par une paroi supérieure (107) et dans lequel une première structure profilée (105) est prévue sur le côté inférieur de la paroi supérieure.

8. Dispositif support (2,100,200,300) selon la revendication 6 ou la revendication 7, dans lequel une deuxième structure profilée (109) est prévue sur le côté inférieur de la plaque (101) entre des structures adjacentes (102).

9. Dispositif support (2,100,200,300) selon la revendication 7 ou la revendication 8, dans lequel les premières structures profilées sont d'un seul tenant (105) avec les structures de plaque (102) et/ou les deuxièmes structures profilées (109) sont d'un seul tenant avec la plaque (101) ou avec les structures de plaque (102).

10. Dispositif support (2,100,200,300) selon l'une des revendications précédentes, dans lequel des ouvertures (12,17,303) sont prévues dans les parois latérales (10,14,21,31,41,51) pour permettre au gaz de circuler à travers elles, et dans lequel le conduit (16,23,33,43,103) est prévu sur la paroi supérieure d'au moins une structure.

11. Dispositif support (2,100,200,300) selon l'une des revendications précédentes, dans lequel la plaque (8,101,201,301) comporte une base (18) dont partent vers le haut les structures (9,20,30,40,102,202,302) et dans lequel d'autres conduits pour recueillir le liquide sont disposés au-dessus de la base (18) entre des structures adjacentes (9,20,30,40,102,202,302).

Fig. 1

Fig. 2

Fig. 3

Fig. 4

Fig. 5

Fig. 6

4/6

Fig. 7

Fig. 8

Fig. 9

Fig. 10

Fig. 11

Fig. 12

Fig. 13